(19)

**Europäisches Patentamt**
**European Patent Office**
**Office européen des brevets**

(11) **EP 3 540 563 A1**

(12) **EUROPEAN PATENT APPLICATION**

(43) Date of publication:
**18.09.2019 Bulletin 2019/38**

(51) Int Cl.:
***G06F 1/32*** *(2019.01)*

(21) Application number: **18161571.7**

(22) Date of filing: **13.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nokia Technologies Oy**
**02610 Espoo (FI)**

(72) Inventors:
• **Omana Iglesias, Jesus**
  **Dublin, D15 (IE)**
• **Lugones, Diego**
  **Dublin, D7 (IE)**

(74) Representative: **Louis Pöhlau Lohrentz**
**Patentanwälte**
**Postfach 30 55**
**90014 Nürnberg (DE)**

(54) **METHOD OF OPERATING A SERVER IN A NETWORK SYSTEM, SERVERS AND A NETWORK SYSTEM**

(57)     The present invention discloses a method of operating a server operable in at least two working states: an active state and at least one sleep state, the method comprising: a) predicting whether the server is going to stay in one or more of the working states for a respective time interval not shorter than the respective transition time interval corresponding to the predicted working state; b) selecting a target working state corresponding to a first transition time interval from the working state(s) predicted with a true outcome in step a), wherein the power consumption of the target working state is lower than that of any other working state(s) which are in step a) predicted with a true outcome; c) configuring the server to operate in the target working state; d) repeating the steps a) to c) after a predetermined time period $t_1$ not longer than the first transition time interval.

Fig. 3

**Description**

Field of the invention

Various example embodiments relate to a method of operating a server in a network system, servers and a network system.

Background

Energy efficiency is a desirable feature across the whole computational spectrum. This becomes evident when analyzing the power consumption in large scale computational environments, e.g. data centers, that can reach tens of megawatts hours (MWh). Modern data centers are being built to accommodate a critical load of over 60 MWh. A large portion of the total power consumption comes from the servers hosted in these data centers, and a major source of energy inefficiency in these servers arise from their narrow dynamic consumption; a completely idle server consumes between 20% and 60% of its peak power. Moreover, the utilization of these servers tends to be low (between 5% and 30% of its peak power) with frequent periods of idleness of different length (in the range of milliseconds to hours). Hence, reducing the power consumption when the servers are idle will significantly reduce the overall power consumption of data centers.

Major improvements have been made on increasing the dynamic power range of severs. In 2008 a typical server consumed between 60% and 70% of its peak power consumption at idle state, and nowadays the range is between 20% and 40%. Server manufacturers cannot keep increasing the dynamic range without affecting the performance of applications running on the servers, therefore, manufacturers decided to allow users to manually set the power modes for several of the server's components (e.g. CPU cores, memory, disk) through well-defined server's ACPIs (Advance Configuration and Power Interface), such that users can decided if/when to transition to a sleep state, and for how long. The ACPI specifications defines three type of sates: i) global states (Gx) that affect the entire server ii) sleep states (Sx) that are part of the G1 state (sleeping) and affects CPU, cache, memory, and hard disk, and finally; iii) CPU states (Cx) that are within the GO state (working), and only affect the CPU.

US 2016/0202745 A1 discloses a method for providing power state change information from a plurality of cores of a processor to a predictor at a periodic interval and generating a prediction to indicate a predicted operation level of the cores during a next operating period. However, the transition time required to transit from the sleep state to the active state is not considered during the prediction. The performance would be affected during the transition time.

An objective of the invention is to improve the performance of the server during the transition time.

Summary of the Invention

The object of the invention is achieved by the method and apparatus according to the claims.

According to one aspect of the present invention, there is provided a method of operating a server in a network system, the server having at least two working states, which are an active state and at least one sleep state, the server requiring a respective transition time interval to transit from each of the at least one sleep state to the active state, and possessing a respective power consumption when being operated in each of the working states, wherein the server consumes less power when being operated in the at least one sleep state than it consumes when being operated in the active state; the method comprising the steps: a) predicting whether the server is going to stay in one or more of the at least two working states for a respective time interval that is not shorter than the respective transition time interval corresponding to the one or more of the at least two working states; the predicting resulting in a true-or-false outcome for each of the predicted working state(s); b) selecting a target working state from the working state(s) which are in step a) predicted with a true outcome, wherein the power consumption of the target working state is lower than that of any other working state(s) which are in step a) predicted with a true outcome; wherein the target working state corresponds to a first transition time interval; c) configuring the server to operate in the target working state; d) repeating the steps a) to c) after a predetermined time period $t_1$ that is not longer than the first transition time interval.

In an embodiment, the predetermined time period $t_1$ is the first transition time interval minus a de-minimis time interval.

In an embodiment, in step a) the predicting results in a true outcome for the predicted working state(s) when a probability of the server staying in the predicted working state is higher than a probability of the server staying in any other working state(s) for the time interval that is not shorter than the transition time interval corresponding to the predicted working state.

In an embodiment, the server comprises a plurality of components (111, 112, 113, 114, 120, 130, 140), one or more of the components having at least two power modes with different power consumption, in step a) the predicting resulting in a true outcome for the predicted working state(s) when each of the plurality of components is predicted to operate respectively in its power mode corresponding to the predicted working state for the time interval that is not shorter than the transition time interval corresponding to the predicted working state.

In an embodiment, the plurality of components is selected from: central processing unit, CPU, core, memory, network interface controller, NIC, disk and graphical processing unit, GPU.

In an embodiment, the method further comprises prior to step a): -f) obtaining the respective transition time interval and the respective power consumption corresponding to each of the working states.

In an embodiment, the server comprises a plurality of components, one or more of the components having at least two power modes with different power consumption, wherein the step f) further comprises: f1) selecting a sleep state that has not been measured from the at least one sleep state, and configuring the server to operate in the selected sleep state; f2) selecting a load that stresses one or more components of the server, wherein, the one or more components to be stressed are determined according to the power mode of the respective components corresponding to the selected sleep state; f3) injecting the load selected in step f2) to the server; f4) measuring the power consumption and the transition time interval from the selected sleep state to the active state; f5) storing the power consumption and the transition time interval measured in step f4); f6) determining whether there is any sleep state that has not been measured; f61) if so, repeating the steps f1) to f6).

In an embodiment, the method further comprises prior to step f4): f31) determining whether the load is received correctly by the server; if so, proceeding with step f4); else, repeating the steps f3) to f31).

In an embodiment, the less power the server consumes in a sleep state, the longer transition time interval is required during a transition from the sleep state to the active state, the method further comprising: - performing the predicting in step a) for a working state requiring the longest transition time interval at beginning of the predetermined time period $t_1$; - repeating the predicting in step a) for other working states in a sequence of decreasing transition time interval within the predetermined time period $t_1$ until the predicting results in a true outcome for the predicted working state;- in step b) selecting the working state having the true outcome as the target working state.

In an embodiment, steps a) and b) are carried out by: b11) selecting a working state requiring the longest transition time interval from the at least two working states at beginning of the predetermined time period $t_1$; b12) determining a prediction time interval that is not shorter than the transition time interval corresponding to the selected working state; b13) determining a probability of the server staying in the selected working state during the prediction time interval; b14) determining whether the probability of the server staying in the selected working state is higher than a probability of the server staying in other working state(s) during the prediction time interval; b141) if so, determining the selected working state as the target working state; b142) else, selecting a working state requiring the longest transition time interval from the working state(s) that has(have) not been selected during the predetermined time period $t_1$, and repeating steps b12), b13) and b14).

In an embodiment, the server comprises a plurality of components, the method further comprising: - monitoring a utilization of the plurality of components;

wherein in step b13), the probability is determined by using Bayesian inference based on an evidence vector $E = \{e_1,..., e_i\}$ comprising one or more vector components extracted from samples of the utilization of each of the plurality of components monitored during an evidence time interval related to the prediction time interval, and the vector components are: mean, standard deviation, skewness, kurtosis, maximum, minimum, parameters of auto-regression between the utilization of the plurality of components, or Jain's fairness index, wherein the probability is determined as:

$$P\left(s_x \middle| e_y\right) = \frac{p(e_y|s_x) \cdot P(s_x)}{\sum_{k=1}^{m} p(e_y|s_k)P(s_k)}$$

with m representing the total number of the working states of the server, $s_x$ representing the selected working state, and $e_y$ representing an evidence vector component, wherein prior probability of the selected working state $P(s_x)$ and joint probability distribution for each state $p(E|s_k)$ are determined based on a historical record of the working state during another predetermined time period $t_2$.

In an embodiment, the probability of the server staying in the selected working state during the prediction time interval is evaluated against a Naive Bayes Classifier risk function:

$$\phi(\widetilde{s_x}, \dot{s_x}) = \begin{cases} 0 & |\dot{s_x} - \breve{s_x}| < \delta \\ 1 & |\dot{s_x} - \breve{s_x}| \geq \delta \end{cases}$$

where $\dot{s_x}$ represents the selected working state, $\breve{s_x}$ = arg max $p(s_x|e_y)$ represents a true working state, and $\delta$ represents a predefined tolerance threshold.

According to another aspect of the present invention, there is provided a server having at least two working states, which are an active state and at least one sleep state, the server requiring a respective transition time interval to transit from each of the at least one sleep state to the active state, and possessing a respective power consumption when being operated in each of the working states, wherein the server consumes less power when being operated in the at least one sleep state than it consumes when being operated in the active state; and wherein the power consumed by the server when being operated in the at least one sleep state is higher than 0 Watt; the server comprising: - a predicting module, configured to predict whether the server is going to stay in one or more of the at least two working states for a respective time interval that is not shorter than the respective transition time interval corresponding to the predicted working state(s); the predicting resulting in a true-or-false outcome for each of the predicted working state(s);- a selecting module, communicatively connected to the predicting module, and configured to select a target working state from the working state(s) which are predicted by the predicting module with a true outcome, wherein the power consumption of the target working state is lower than that of any other working state(s) which are predicted by the predicting module with a true outcome; wherein the target working state corresponds to a first transition time interval; - a working state configuring module, communicatively connected to the selecting module, and configured to configure the server to operate in the target working state.

According to another aspect of the present invention, there is provided a master server communicatively connected to at least one slave server having at least two working states, which are an active state and at least one sleep state, wherein the at least one slave server consumes less power when being operated in the at least one sleep state than it consumes when being operated in the active state; the at least one sleep state comprising an off state in which the at least one slave server has zero power consumption; the master server comprising: - a predicting module, configured to predict whether one of the at least one slave server is going to stay in one or more of its at least two working states for a respective time interval that is not shorter than the respective transition time interval corresponding to the predicted working state(s); the predicting resulting in a true-or-false outcome for each of the predicted working state(s); - a selecting module, communicatively connected to the predicting module, and configured to select a target working state for the one of the at least one slave server from the working state(s) which are predicted by the predicting module with a true outcome, wherein the power consumption of the target working state is lower than that of any other working state(s) which are predicted by the predicting module with a true outcome; wherein the target working state corresponds to a first transition time interval; a working state configuring module, communicatively connected to the selecting module and the one of the slave server, and configured to configure the one of the slave server to operate in the target working state.

According to another aspect of the present invention, there is provided a network system comprising a master server according to the present invention and at least one slave server having at least two working states, which are an active state and at least one sleep state, wherein the at least one slave server consumes less power when being operated in the at least one sleep state than it consumes when being operated in the active state; the at least one sleep state comprising an off state in which the at least one slave server has zero power consumption.

According to the present invention, the transition from a sleep state to the active state would take place in advance, i.e. before the time when the server needs to be active. By the time the server is predicted to be active, the server would be already activated. Thus, the performance during the transition time would not be affected.

The solution in the present invention makes it possible to operate a server in an appropriate sleep state such that power consumption is reduced while the performance of the applications is not or slightly affected.

Brief description of the figures

Fig. 1 depicts an illustrative structural diagram of a server 101 according to an embodiment of the present invention;
Fig. 2 depicts a schematic table of the transition time required by the server 101 to transit from each of the sleep states to the active state and the power consumption of each of the relevant component of the server 101 when it is operated in each of the working states according to an example of the present invention;
Fig. 3 depicts a schematic flow diagram of a method according to an embodiment of the present invention;
Fig. 4 depicts a schematic flow diagram of the method according to an embodiment of the present invention;
Fig. 5 depicts a schematic flow diagram of a method of obtaining the transition time and the power consumption according to an embodiment of the present invention;
Fig. 6 depicts a schematic functional block diagram of a server 101 according to another embodiment of the present invention;
Fig. 7 depicts a schematic topology diagram of a network system according to another embodiment of the present invention;
Fig. 8 depicts a schematic table of the transition time required by the slave server 721 to transit from each of the sleep state to the active state and the power consumption of each of the component of the slave server 721 when it is operated in each of the working states according to an example of the present invention;
Fig. 9 depicts a schematic functional block diagram of a master server 710 according to another embodiment of the present invention.

Same or similar reference numerals refer to same or similar parts or components.

Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps are not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

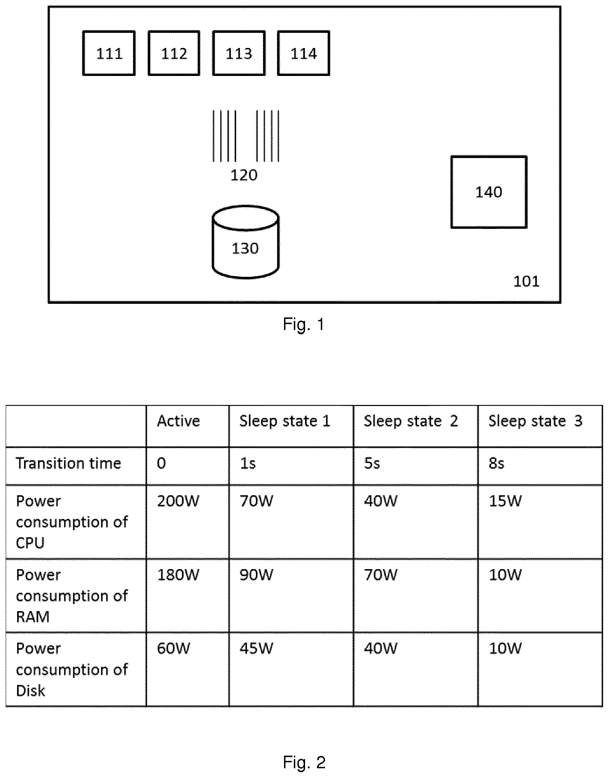

Fig.1 shows an illustrative structural diagram of a server 101 according to an embodiment of the present invention.

As shown in Fig.1, the server 101 is a server in a network system (not shown). The server 101 comprises four CPU cores 111, 112, 113 and 114 (hereinafter collectively referred to as CPU 110). The number of CPU cores is given here only as an example. In other examples, the server 101 may comprises any number of CPU core(s). In the embodiment shown in Fig. 1, the server 101 further comprises a RAM 120, a disk 130, a network interface controller (NIC) 140. Software or firmware may be implemented on the above mentioned hardware components. Especially, ACPI is implemented in the server 101, so that the working state of the server 101 may be configured through the ACPI. The server 101 may comprise more or less components as shown in Fig.1. For example, the server 101 may further comprise a graphics processing unit, GPU (not shown).

The server 101 may be operated in at least two working states: an active state and at least one sleep state, wherein the server 101 requires a respective transition time interval to transit from each of the at least one sleep state to the active state, and possesses a respective power consumption when being operated in each of the working states. The server 101 consumes less energy when being operated in the at least one sleep state than it consumes when being operated in the active state.

Fig. 2 shows a schematic table of the transition time required by the server 101 to transit from each of the sleep states to the active state and the power consumption of each of the relevant component of the server 101 when it is operated in each of the working state according to an example of the present invention.

As shown in Fig.2, the server 101 may be operated in one of four working states, one active state and three sleep states: sleep state 1, sleep state 2 and sleep state 3. The sleep states are given by way of example. In other examples, the server 101 may be operated in more or less sleep state(s). Advantageously, the server 101 may be operated in at least two sleep states.

Furthermore, it can be seen from Fig. 2, the CPU 110, the RAM 120 and the disk 130 respectively have different power modes with different power consumption (and they could also have different transition times). Specifically, the CPU 110 has four power modes, each with a power consumption of 200W, 70W, 40W or 15W. The RAM 120 has four power modes, each with a power consumption of 180W, 90W, 70W or 10W. The disk 130 has four power modes, each with a power consumption of 60W, 45W, 40W or 10W. When the server is configured to operate in one of the sleep state, each component operates in a power mode corresponding to said sleep state.

In Fig. 2, the components having at least two power modes are shown by way of example. In another example, more or less components may have at least two power modes with different power consumption. In one example, only one (any one) component has at least two power modes with different power consumption. In another example, all the components of the server 101 respectively have at least two power modes with different power consumption.

Theoretically, the number of components comprised in the server being k, the number of possible power modes of the i-th component being $n_i$, the maximum number of working states may be $n_1 \cdot n_2 \cdot \Lambda \cdot n_k$. Advantageously, the number of working states is less than the maximum number. In the example shown in Fig.2, the number of working states is identical with the number of power modes of each of the component. However, if the server comprises three components and each of them has four power modes, the number of the maximum possible working states may be up to $4^3 = 64$.

The power consumption of the components of the server 101 builds up the total power consumption of the server 101. As can be seen from Fig. 2, the less power the server 101 consumes in a sleep state, the longer transition time is required during a transition from the sleep state to active.

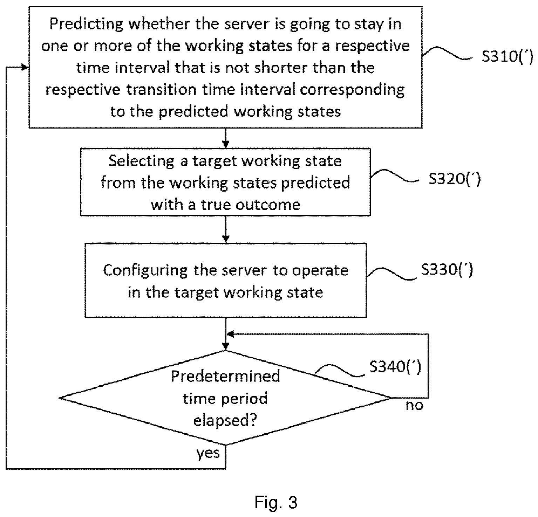

Fig. 3 shows a schematic flow diagram of a method according to an embodiment of the present invention. The method may be implemented in an IDLE_MANAGER. In the following, the method will be described with respect to an example where the IDLE_MANAGER is implemented as a software module in the server 101.

In step S310, the IDLE_MANAGER predicts whether the server 101 is going to stay in one or more of the at least two working states for a respective time interval that is not shorter than the respective transition time interval corresponding to the one or more of the at least two working states. The predicting results in a true-or-false outcome for each of the predicted working state(s).

In one embodiment, the predicting in step S310 results in a true outcome for the predicted working state(s) when a probability of the server 101 staying in the predicted working state is higher than a probability of the server 101 staying in any other working state(s) for the time interval that is not shorter than the transition time interval corresponding to the predicted working state.

As shown in Fig. 1, the server 101 comprises a plurality of components 111, 112, 113, 114, 120, 130 and 140. Referring to the example shown in Fig.2, the CPU 110, the RAM 120 and the disk 130 have at least two power modes with different power consumption. Then in step S310 the predicting results in a true outcome for the predicted working state(s) when each of the plurality of components 110, 120, and 130 is predicted to operate respectively in its power mode corresponding to the predicted working state for the time interval that is not shorter than the transition time interval corresponding to the predicted working state.

In step S320, the IDLE_MANAGER selects a target working state from the working state(s) which are in step S310 predicted with a true outcome, wherein the power consumption of the target working state is lower than that of any other working state(s) which are in step S310 predicted with a true outcome; wherein the target working state corresponds to a first transition time interval.

In one embodiment, the predicting in step S310 is performed for a working state requiring the longest transition time interval at beginning of the predetermined time period $t_1$. Then the predicting in step S310 is repeated for other working states in a sequence of decreasing transition time interval within the predetermined time period $t_1$ until the predicting results in a true outcome for the predicted working state. Then in step S320 the working state having the true outcome is selected as the target working state.

In another example, the predicting in step S310 may be performed for a sleep state requiring the shortest transition time interval at beginning of the predetermined time period $t_1$. Then the predicting in step S310 is repeated for other working states in a sequence of increasing transition time interval within the predetermined time period $t_1$ until the predicting results in a false outcome for the predicted working state. Then in step S320 the working state having the last true outcome is selected as the target working state.

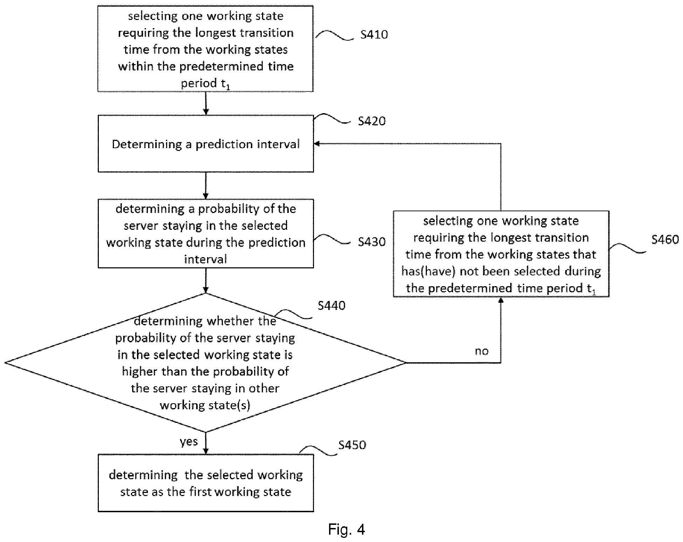

Specifically, Fig. 4 shows a schematic flow diagram of the method according to an embodiment of the present invention.

In step S410, the IDLE_MANAGER selects a working state requiring the longest transition time interval from the at least two working states at beginning of the predetermined time period $t_1$. Taken the example shown in Fig 2, it is the sleep state 3.

In step S420, the IDLE_MANAGER determines a prediction time interval that is not shorter than the transition time interval corresponding to the selected working state. If sleep state 3 is selected, the prediction interval shall be equal to or longer than 8s. Advantageously, the prediction interval is not shorter than the transition time corresponding to the selected working state plus a predetermined time period, after which the target working state shall be determined again. In the present example, the predetermined time period $t_1$ is 10 ms. Then the prediction interval is advantageously determined as 8010 ms.

In step S430, the IDLE_MANAGER determines a probability of the server 101 staying in the selected working state during the prediction interval.

Specifically, the probability may be determined using any probabilistic machine learning algorithms, e.g. Gaussian Naive Bayes. In the following, a specific embodiment will be described using Bayesian inference to calculate the probability. Bayesian inference provides high accuracy.

Specifically, the utilization of each of the components is monitored. The monitored utilization is stored together with a time stamp for future use. An evidence vector $E = \{e_1,..., e_i\}$ comprising one or more vector components is extracted from samples of the utilization of each component monitored during an evidence interval, defined as $L = \{l_1, l_2,..., l_h\}$, where h is the number of samples in the interval. The evidence interval is related to the prediction interval. In one example, the evidence interval is set to two-thirds of the prediction interval. The evidence interval may be extended or reduced to achieve higher accuracy. Advantageously, the samples are extracted from the most recent or up-to-date evidence interval. In one example, a time interval between an ending end of the evidence interval and a time point of determining the probability is determined according to a requirement of real-time estimation. For example, time interval between the ending end of the evidence interval and the time point of determining the probability is 1 second. If the requirement of real-time estimation is higher than that could be achieved by the time interval of 1 second, the time interval may be set to a lower value, and vice versa.

The vector components comprised in the evidence vector are mutually-independent and may be: mean, standard deviation, skewness, kurtosis, maximum, minimum, parameters of auto-regression between the utilization of the plurality of components, or Jain's fairness index. Some of these vector components might not be completely independent from each other, however, research has shown that the optimal situation might still be found when some vector components are correlated to certain extent. In an example, the evidence vector comprises some of the parameters mentioned above. In another example, the evidence vector comprises all eight parameters mentioned above. More vector components could be added to the model in order to increase its accuracy.

Specifically, the probability of the server staying in the selected working state during the prediction interval is determined as:

$$P\left(s_x\middle|e_y\right) = \frac{p(e_y|s_x) \cdot P(s_x)}{\sum_{k=1}^{m} p(e_y|s_k)P(s_k)} \quad (1)$$

with m representing the total number of the working states of the server 101, $s_x$ representing the working state selected in step S410, here the sleep state 3, and $e_y$ representing an evidence vector component. The prior probability of the selected working state $P(s_x)$ and joint probability distribution for each state $p(E|s_k)$ are determined based on a historical record of the working state during an another predetermined time period $t_2$. In one example, the other predetermined time period $t_2$ is a month.

In step S440, the IDLE_MANAGER determines whether the probability of the server 101 staying in the selected working state is higher than a probability of the server 101 staying in other working state(s).

Specifically, the probability of the server 101 staying in the selected working state during the prediction interval determined in step S430 may be evaluated against a risk function. The risk function may be any Bayes function estimator, for example: posterior median, or other empirical Bayesian estimator. Advantageously, the probability is evaluated against the Naïve Bayes Classifier risk function:

$$\phi(\widetilde{s_x}, \dot{s}_x) = \begin{cases} 0 & |\dot{s}_x - \widetilde{s_x}| < \delta \\ 1 & |\dot{s}_x - \widetilde{s_x}| \geq \delta \end{cases} \quad (2)$$

where $\dot{s}_x$ represents the selected working state,

$$\widetilde{s_x} = \arg\max p(s_x|e_y)$$

represents a true working state, and $\delta$ represents a predefined tolerance threshold. Comparing to other risk function, the one used in this embodiment is easier, because setting a threshold is relatively easy and thus more convenient.

If necessary, the probability of the server 101 staying in other working state(s) during the prediction interval may be similarly determined using the equation (1) as above.

The accuracy (i.e. sum of true active states plus true sleep states prediction divided by the total number of predictions) and precision (i.e. true sleep state prediction divided by the sum of true sleep state and false sleep state predication) of the Bayesian predictions is constantly assessed, and the value of $\delta$ may be modified accordingly if the accuracy or the precision of the Bayesian predictions decreases.

If the value returned by the risk function is true, i.e. 1, the IDLE_MANAGER determines the selected working state as the target working state in step S450.

If the value returned by the risk function is false i.e., 0, the method continues with step S460, in which the IDLE_MANAGER selects a working state requiring the longest transition time from the working state(s) that has(have) not been selected during the predetermined time period $t_1$, and then steps S420, S430 and S440 will be repeated.

After the target working state is selected in step S320, the IDLE_MANAGER communicates the selected target working state to the ACPI of the server 101 in step S330. Thereby, the server 101 is configured to operate in the target working state.

In step S340, it is determined whether the predetermined time period $t_1$ has elapsed, wherein the predetermined time period $t_1$ is not longer than the first transition time. In the example mentioned above, the predetermined time period $t_1$ is 10 ms. The predetermined time period $t_1$ may be adapted according to the first transition time. In an example, the predetermined time period $t_1$ equals to the first transition time. In one embodiment, the predetermined time period $t_1$ is the first transition time interval minus a de-minimis time interval. The de-minimis time interval may correspond to a required processing time and is an insignificant amount of time interval. A time interval not longer than 10 milliseconds should be considered insignificant.

If it is determined in step S340 that the predetermined time period $t_1$ has elapsed, the method continues with step S310, and the steps S310, S320 and S330 will be repeated.

If it is determined in step S340 that the predetermined time period $t_1$ has not elapsed, the step S340 will be repeated until the predetermined time period $t_1$ elapses.

Prior to step S310, the method according to an embodiment of the present invention further comprises a step S301, in which the IDLE_MANAGER obtains the respective transition time interval and the respective power consumption corresponding to each of the working states.

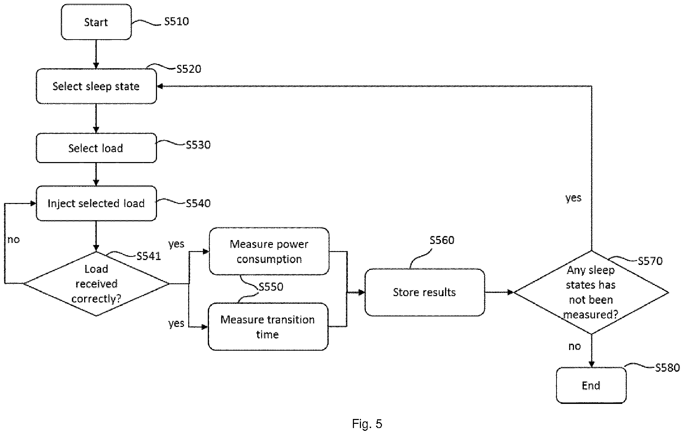

The transition time and the power consumption may be available from the datasheet of the server, and transmitted to the IDLE_MANAGER. In an embodiment, the transition time and the power consumption are measured according to the method illustrated in Fig. 5.

Fig. 5 shows a schematic flow diagram of a method of obtaining the transition time and the power consumption according to an embodiment of the present invention.

The method of obtaining the transition time and the power consumption starts in step S510. Then in step S520, one sleep state that has not been measured is selected from the at least one sleep state of the server 101, and the server 101 is configured to operate in the selected sleep state.

In step S530, a load that stresses one or more components of the server 101 is selected, wherein, the one or more components are determined according to the power mode of the respective components corresponding to the selected sleep state. For a working state with NIC 140 set to high power mode, a load that mostly stresses the network will be selected, for instance, a messaging application as it uses mostly the network rather than CPU or memory. As another example, for a working state with CPU, GPU and memory set to high power mode, decoding video may be selected as the load, as it requires CPU, GPU and memory.

In step S540, the load selected in step S530 is injected to the server 101. Advantageously, in step S541 it is determined whether the load is received correctly by the server. If it is determined in step S541 that the load is not received correctly, step S540 is repeated, and the selected load will be injected again until it is received correctly.

If it is determined in step S541 that the load is received correctly, the method proceeds with step S550, in which the power consumption and the transition time from the selected sleep state to the active state are measured. Then in step S560, the power consumption and the transition time measured in step S550 are stored. The table shown in Fig. 2 is an example of the obtained transition times and the power consumptions.

In step S570 it is determined whether there is any sleep state that has not been measured. If so, the method continues with step S520. Else, the method of obtaining the transition time and the power consumption terminates in step S580.

According to another aspect of the present invention, there is also provided a server 101.

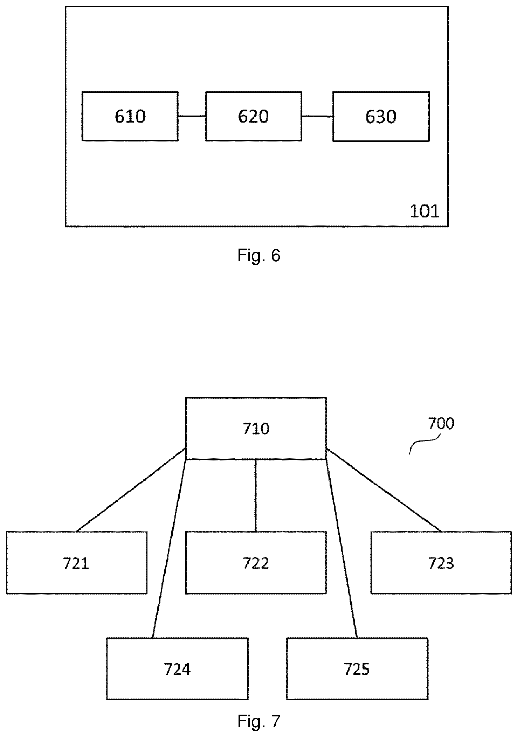

Fig. 6 shows a schematic functional block diagram of a server 101 according to another embodiment of the present invention.

The server 101 may be operated in at least two working states, which are an active state and at least one sleep state. The server 101 requires a respective transition time interval to transit from each of the at least one sleep state to the active state, and possesses a respective power consumption when being operated in each of the working states, wherein the server 101 consumes less power when being operated in the at least one sleep state than it consumes when being operated in the active state; and wherein the power consumed by the server 101 when being operated in the at least one sleep state is higher than 0 Watt.

The server 101 comprises: a predicting module 610, a selecting module 620 and a working state configuring module 630.

The predicting module 610 is configured to predict whether the server 101 is going to stay in one or more of the at least two working states for a respective time interval that is not shorter than the respective transition time interval corresponding to the predicted working state(s); the predicting resulting in a true-or-false outcome for each of the predicted working state(s).

The selecting module 620 is communicatively connected to the predicting module 610, and configured to select a target working state from the working state(s) which are predicted by the predicting module 610 with a true outcome, wherein the power consumption of the target working state is lower than that of any other working state(s) which are predicted by the predicting module 610 with a true outcome; wherein the target working state corresponds to a first transition time interval.

The working state configuring module 630 is communicatively connected to the selecting module 620, and configured to configure the server 101 to operate in the target working state.

In the above, the embodiments of the present invention are described with respect to a server 101 which is not completely switched off during operation, i.e., the power consumed by the server 101 when being operated in the at least one sleep state is higher than 0 Watt. Thus, the IDLE_MANAGER may be implemented as a software module in the server 101. Alternatively, in another embodiment, the server may be completely switched off during operation, then it is not possible to maintain a model with the probability of idleness on the server, hence, it is necessary to have one or more servers that must be constantly powered on (master server), and will be the ones that communicate with a different set of servers (slave server) to command them through their ACPIs to transition to a particular sleep state.

Fig. 7 shows a schematic topology diagram of a network system according to another embodiment of the present invention.

In Fig. 7, the network system 700 comprises one master server 710, and five slave servers 721, 722, 723, 724 and 725 communicatively connected to the master server 710. The master server 710 is not switched off during operation, while the slave servers may be switched off. The number of the master server and the slave servers is shown by way of example. In other possible examples, the network system 700 may comprise more than one master server, more or less slave server(s).

At least one slave server (here all five slave servers 721, 722, 723, 724 and 725) has at least two working states: an active state and at least one sleep state. The at least one sleep state comprises an off state in which the at least one slave server has zero power consumption.

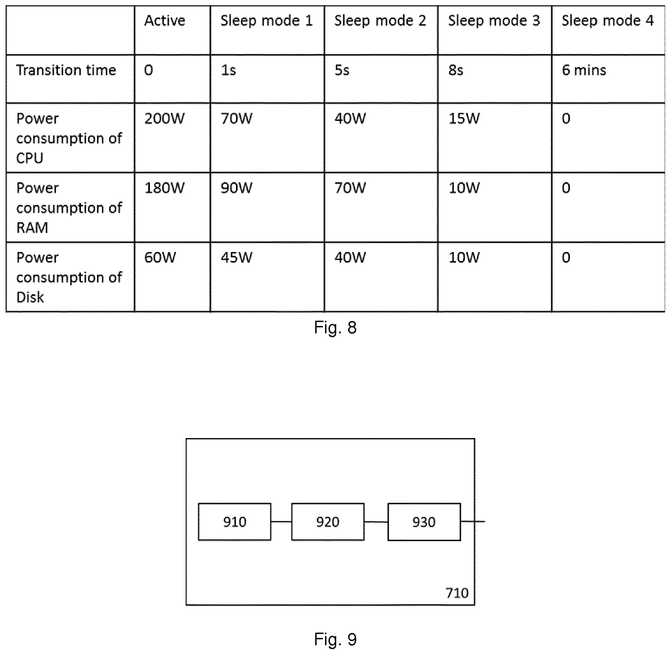

Fig. 8 shows a schematic table of the transition time required by the slave server 721 to transit from each of the sleep state to the active state and the power consumption of each of the component of the slave server 721 when it is operated in each of the working states according to an example of the present invention.

Compared to Fig. 2, the slave server 721 additionally comprises a sleep state 4, in which it has zero power consumption. Accordingly, the sleep state 4 requires a relative long transition time of 6 minutes in this example.

The method according to the present invention described above with respect to Fig. 3 may be implemented as a software module IDLE_MANAGER in the master server 710. In the following, the function of the IDLE_MANAGER in the master server 710 will be described with respect to Fig. 3, whereas the reference numeral of the steps is further marked with "'" representing the embodiment in the master server 710.

Specifically, in step S310', the IDLE_MANAGER in the master server 710 predicts whether the slave server 721 is going to stay in one or more of the at least two working states for a respective time interval that is not shorter than the respective transition time interval corresponding to the one or more of the at least two working states. The predicting results in a true-or-false outcome for each of the predicted working state(s).

In step S320, the IDLE_MANAGER in the master server 710 selects for the slave server 721 a target working state from the working state(s) which are in step S310' predicted with a true outcome, wherein the power consumption of the target working state is lower than that of any other working state(s) which are in step S310 predicted with a true outcome; wherein the target working state corresponds to a first transition time interval.

After the target working state is selected for the slave server 721 in step S320', the IDLE_MANAGER in the master server 710 communicates the selected target working state to the ACPI of the server 721 in step S330'. Thereby, the server 721 is configured to operate in the target working state, and the components of the slave server 721 can operate respectively in its power mode corresponding to the target working state.

In step S340', it is determined whether the predetermined time period $t_1$ has elapsed, wherein the predetermined time period $t_1$ is not longer than the first transition time.

If it is determined in step S340' that the predetermined time period $t_1$ has elapsed, the method continues with step S310', and the steps S310', S320' and S330' will be repeated.

If it is determined in step S340' that the predetermined time period $t_1$ has not elapsed, the step S340' will be repeated until the predetermined time period $t_1$ elapses.

The IDLE_MANAGER in the master server 710 may also perform the method described above for other slave servers 722, 723, 724, and 725 comprised in the network system 700 respectively.

According to another aspect of the present invention, there is also provided a master server 710.

Fig. 9 shows a schematic functional block diagram of a master server 710 according to another embodiment of the present invention.

The master server 710 is communicatively connected to at least one slave server 721, 722, 723, 724, 725 having at least two working states, which are an active state and at least one sleep state, wherein the at least one slave server 721, 722, 723, 724, 725 consumes less power when being operated in the at least one sleep state than it consumes when being operated in the active state; the at least one sleep state comprising an off state in which the at least one slave server 721, 722, 723, 724, 725 has zero power consumption.

The master server 710 comprises a predicting module 910, a selecting module 920 and a working state configuring module 930.

The predicting module 910 is configured to predict whether one of the at least one slave server for example slave server 721 is going to stay in one or more of its at least two working states for a respective time interval that is not shorter than the respective transition time interval corresponding to the predicted working state(s); the predicting resulting in a true-or-false outcome for each of the predicted working state(s).

The selecting module 920 is communicatively connected to the predicting module 910, and configured to select a target working state for the one of the at least one slave server 721 from the working state(s) which are predicted by the predicting module 910 with a true outcome, wherein the power consumption of the target working state is lower than that of any other working state(s) which are predicted by the predicting module 910 with a true outcome; wherein the target working state corresponds to a first transition time interval.

The working state configuring module 930 is communicatively connected to the selecting module 920 and the one of the slave server 721, and configured to configure the one of the slave server 721 to operate in the target working state.

## Claims

1. A method of operating a server (101, 721) in a network system, the server (101, 721) having at least two working states, which are an active state and at least one sleep state, the server (101, 721) requiring a respective transition time interval to transit from each of the at least one sleep state to the active state, and possessing a respective power consumption when being operated in each of the working states, wherein the server (101, 721) consumes less power when being operated in the at least one sleep state than it consumes when being operated in the active state;
the method comprising the steps:

   a) predicting whether the server (101, 721) is going to stay in one or more of the at least two working states for a respective time interval that is not shorter than the respective transition time interval corresponding to the one or more of the at least two working states; the predicting resulting in a true-or-false outcome for each of the predicted working state(s);
   b) selecting a target working state from the working state(s) which are in step a) predicted with a true outcome, wherein the power consumption of the target working state is lower than that of any other working state(s) which are in step a) predicted with a true outcome; wherein the target working state corresponds to a first transition time interval;
   c) configuring the server (101, 721) to operate in the target working state;

d) repeating the steps a) to c) after a predetermined time period $t_1$ that is not longer than the first transition time interval.

2. The method according to claim 1, the predetermined time period $t_1$ being the first transition time interval minus a de-minimis time interval.

3. The method according to claim 1, in step a) the predicting resulting in a true outcome for the predicted working state(s) when a probability of the server (101, 721) staying in the predicted working state is higher than a probability of the server (101, 721) staying in any other working state(s) for the time interval that is not shorter than the transition time interval corresponding to the predicted working state.

4. The method according to claim 1, the server (101, 721) comprising a plurality of components (111, 112, 113, 114, 120, 130, 140), one or more of the components having at least two power modes with different power consumption, in step a) the predicting resulting in a true outcome for the predicted working state(s) when each of the plurality of components (111, 112, 113, 114, 120, 130, 140) is predicted to operate respectively in its power mode corresponding to the predicted working state for the time interval that is not shorter than the transition time interval corresponding to the predicted working state.

5. The method according to claim 4, wherein the plurality of components is selected from: central processing unit, CPU, core, memory, network interface controller, NIC, disk and graphical processing unit, GPU.

6. The method according to claim 1, further comprising prior to step a):

f) obtaining the respective transition time interval and the respective power consumption corresponding to each of the working states.

7. The method according to claim 6, the server (101, 721) comprising a plurality of components (111, 112, 113, 114, 120, 130, 140), one or more of the components having at least two power modes with different power consumption, wherein the step f) further comprises:

f1) selecting a sleep state that has not been measured from the at least one sleep state, and configuring the server (101, 721) to operate in the selected sleep state;
f2) selecting a load that stresses one or more components (111, 112, 113, 114, 120, 130, 140) of the server (101, 721), wherein, the one or more components (111, 112, 113, 114, 120, 130, 140) to be stressed are determined according to the power mode of the respective components corresponding to the selected sleep state;
f3) injecting the load selected in step f2) to the server (101, 721);
f4) measuring the power consumption and the transition time interval from the selected sleep state to the active state;
f5) storing the power consumption and the transition time interval measured in step f4);
f6) determining whether there is any sleep state that has not been measured;

f61) if so, repeating the steps f1) to f6).

8. The method according to claim 7, further comprising prior to step f4):

f31) determining whether the load is received correctly by the server (101, 721);

- if so, proceeding with step f4);
- else, repeating the steps f3) to f31).

9. The method according to claim 1, wherein the less power the server (101, 721) consumes in a sleep state, the longer transition time interval is required during a transition from the sleep state to the active state, the method further comprising:

- performing the predicting in step a) for a working state requiring the longest transition time interval at beginning of the predetermined time period $t_1$;
- repeating the predicting in step a) for other working states in a sequence of decreasing transition time interval within the predetermined time period $t_1$ until the predicting results in a true outcome for the predicted working state;
- in step b) selecting the working state having the true outcome as the target working state.

10. The method according to claim 1, wherein steps a) and b) are carried out by:

b11) selecting a working state requiring the longest transition time interval from the at least two working states at beginning of the predetermined time period $t_1$;
b12) determining a prediction time interval that is not shorter than the transition time interval corresponding to the selected working state;
b13) determining a probability of the server (101, 721) staying in the selected working state during the prediction time interval;
b14) determining whether the probability of the server (101, 721) staying in the selected working state is higher than a probability of the server (101, 721) staying in other working state(s) during the prediction time interval;

b141) if so, determining the selected working state as the target working state;
b142) else, selecting a working state requiring the longest transition time interval from the working state(s) that has(have) not been selected during the predetermined time period $t_1$, and repeating steps b12), b13) and b14).

11. The method according to claim 10, the server (101, 721) comprising a plurality of components, the method further comprising:

- monitoring a utilization of the plurality of components;
wherein in step b13), the probability is determined by using Bayesian inference based on an evidence vector $E = \{e_1, ..., e_i\}$ comprising one or more vector components extracted from samples of the utilization of each of the plurality of components monitored during an evidence time interval related to the prediction time interval, and the vector components are: mean, standard deviation, skewness, kurtosis, maximum, minimum, parameters of auto-regression between the utilization of the plurality of components, or Jain's fairness index, wherein the probability is determined as:

$$P\left(s_x|e_y\right) = \frac{p(e_y|s_x) \cdot P(s_x)}{\sum_{k=1}^{m} p(e_y|s_k)P(s_k)}$$

with m representing the total number of the working states of the server (101, 721), $s_x$ representing the selected working state, and $e_y$ representing an evidence vector component,
wherein prior probability of the selected working state $P(s_x)$ and joint probability distribution for each state $p(E|s_k)$ are determined based on a historical record of the working state during another predetermined time period $t_2$.

12. The method according to claim 11, wherein the probability of the server (101, 721) staying in the selected working state during the prediction time interval is evaluated against a Naïve Bayes Classifier risk function:

$$\phi(\widetilde{s_x}, \dot{s_x}) = \begin{cases} 0 & |\dot{s_x} - \widetilde{s_x}| < \delta \\ 1 & |\dot{s_x} - \widetilde{s_x}| \geq \delta \end{cases}$$

where $\dot{s_x}$ represents the selected working state, $\widetilde{s_x}$ = arg max $p(s_x|e_y)$ represents a true working state,

and $\delta$ represents a predefined tolerance threshold.

13. A server (101) having at least two working states, which are an active state and at least one sleep state, the server (101) requiring a respective transition time interval to transit from each of the at least one sleep state to the active state, and possessing a respective power consumption when being operated in each of the working states, wherein the server (101) consumes less power when being operated in the at least one sleep state than it consumes when being operated in the active state; and wherein the power consumed by the server (101) when being operated in the at least one sleep state is higher than 0 Watt; the server (101) comprising:

- a predicting module (610), configured to predict whether the server (101, 721) is going to stay in one or more of the at least two working states for a respective time interval that is not shorter than the respective transition time interval corresponding to the predicted working state(s); the predicting resulting in a true-or-false outcome for each of the predicted working state(s);
- a selecting module (620), communicatively connected to the predicting module (610), and configured to select a target working state from the working state(s) which are predicted by the predicting module (610) with a true outcome, wherein the power consumption of the target working state is lower than that of any other working state(s) which are predicted by the predicting module (610) with a true outcome; wherein the target working state corresponds to a first transition time interval;
- a working state configuring module (630), communicatively connected to the selecting module (620), and configured to configure the server (101) to operate in the target working state.

14. A master server (710) communicatively connected to at least one slave server (721, 722, 723, 724, 725) having at least two working states, which are an active state and at least one sleep state, wherein the at least one slave server (721, 722, 723, 724, 725) consumes less power when being operated in the at least one sleep state than it consumes when being operated in the active state; the at least one sleep state comprising an off state in which the at least one slave server (721, 722, 723, 724, 725) has zero power consumption;
the master server (710) comprising:

- a predicting module (910), configured to predict whether one of the at least one slave server (721) is going to stay in one or more of its at least two working states for a respective time interval that is not shorter than the respective transition time interval corresponding to the predicted working state(s); the predicting resulting in a true-or-false outcome for each of the predicted working state(s);

- a selecting module (920), communicatively connected to the predicting module (910), and configured to select a target working state for the one of the at least one slave server (721) from the working state(s) which are predicted by the predicting module (910) with a true outcome, wherein the power consumption of the target working state is lower than that of any other working state(s) which are predicted by the predicting module (910) with a true outcome; wherein the target working state corresponds to a first transition time interval;

a working state configuring module (930), communicatively connected to the selecting module and the one of the slave server (721), and configured to configure the one of the slave server (721) to operate in the target working state.

15. A network system (700) comprising a master server (710) according to claim 14 and at least one slave server (721, 722, 723, 724, 725) having at least two working states, which are an active state and at least one sleep state, wherein the at least one slave server (721, 722, 723, 724, 725) consumes less power when being operated in the at least one sleep state than it consumes when being operated in the active state; the at least one sleep state comprising an off state in which the at least one slave server (721, 722, 723, 724, 725) has zero power consumption.

Fig. 1

|  | Active | Sleep state 1 | Sleep state 2 | Sleep state 3 |
|---|---|---|---|---|
| Transition time | 0 | 1s | 5s | 8s |
| Power consumption of CPU | 200W | 70W | 40W | 15W |
| Power consumption of RAM | 180W | 90W | 70W | 10W |
| Power consumption of Disk | 60W | 45W | 40W | 10W |

Fig. 2

Predicting whether the server is going to stay in one or more of the working states for a respective time interval that is not shorter than the respective transition time interval corresponding to the predicted working states ⟶ S310(')

Selecting a target working state from the working states predicted with a true outcome ⟶ S320(')

Configuring the server to operate in the target working state ⟶ S330(')

Predetermined time period elapsed? ⟶ S340(')

no

yes

Fig. 3

selecting one working state requiring the longest transition time from the working states within the predetermined time period $t_1$ — S410

Determining a prediction interval — S420

determining a probability of the server staying in the selected working state during the prediction interval — S430

determining whether the probability of the server staying in the selected working state is higher than the probability of the server staying in other working state(s) — S440

selecting one working state requiring the longest transition time from the working states that has(have) not been selected during the predetermined time period $t_1$ — S460

no

yes

determining the selected working state as the first working state — S450

Fig. 4

Fig. 5

Fig. 6

Fig. 7

|  | Active | Sleep mode 1 | Sleep mode 2 | Sleep mode 3 | Sleep mode 4 |
|---|---|---|---|---|---|
| Transition time | 0 | 1s | 5s | 8s | 6 mins |
| Power consumption of CPU | 200W | 70W | 40W | 15W | 0 |
| Power consumption of RAM | 180W | 90W | 70W | 10W | 0 |
| Power consumption of Disk | 60W | 45W | 40W | 10W | 0 |

Fig. 8

Fig. 9

Europäisches
Patentamt

European
Patent Office

Office européen
des brevets

# EUROPEAN SEARCH REPORT

Application Number

EP 18 16 1571

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/016339 A1 (DASGUPTA GARGI B [IN] ET AL) 20 January 2011 (2011-01-20) * abstract * * paragraphs [0019] - [0038]; figures 1, 2 * | 1-15 | INV. G06F1/32 |
| A,D | US 2016/202745 A1 (SONG JUSTIN J [US] ET AL) 14 July 2016 (2016-07-14) * paragraph [0015] * | 1-15 | |
| A | US 2009/172441 A1 (KANT KRISHNA [US] ET AL) 2 July 2009 (2009-07-02) * paragraph [0010] * | 1-15 | |
| A | EP 2 746 896 A2 (XEROX CORP [US]) 25 June 2014 (2014-06-25) * abstract * | 1-15 | |

TECHNICAL FIELDS
SEARCHED (IPC)

G06F

The present search report has been drawn up for all claims

| Place of search | Date of completion of the search | Examiner |
|---|---|---|
| The Hague | 24 August 2018 | Cohen, Benjamin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 3 540 563 A1

## ANNEX TO THE EUROPEAN SEARCH REPORT
## ON EUROPEAN PATENT APPLICATION NO.

EP 18 16 1571

This annex lists the patent family members relating to the patent documents cited in the above-mentioned European search report.
The members are as contained in the European Patent Office EDP file on
The European Patent Office is in no way liable for these particulars which are merely given for the purpose of information.

24-08-2018

| Patent document cited in search report | | Publication date | Patent family member(s) | | Publication date |
|---|---|---|---|---|---|
| US 2011016339 | A1 | 20-01-2011 | NONE | | |
| US 2016202745 | A1 | 14-07-2016 | US 2009150695 A1 | | 11-06-2009 |
| | | | US 2012023355 A1 | | 26-01-2012 |
| | | | US 2016202745 A1 | | 14-07-2016 |
| US 2009172441 | A1 | 02-07-2009 | NONE | | |
| EP 2746896 | A2 | 25-06-2014 | AU 2013257517 A1 | | 10-07-2014 |
| | | | EP 2746896 A2 | | 25-06-2014 |
| | | | JP 6104144 B2 | | 29-03-2017 |
| | | | JP 2014132449 A | | 17-07-2014 |
| | | | US 2014181552 A1 | | 26-06-2014 |

EPO FORM P0459

For more details about this annex : see Official Journal of the European Patent Office, No. 12/82

20

EP 3 540 563 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160202745 A1